## Europäisches Patentamt

## European Patent Office

## Office européen des brevets

(11) Publication number: **0 206 519**
**B1**

# EUROPEAN PATENT SPECIFICATION

(45) Date of publication of patent specification: **25.07.90**

(21) Application number: **86303850.1**

(22) Date of filing: **21.05.86**

(51) Int. Cl.⁵: **C 22 C 21/06,** C 22 C 21/10, G 11 B 5/64, G 11 B 5/704

(54) **An aluminium alloy and a magnetic disk substrate comprising the alloy.**

(30) Priority: **21.05.85 JP 108800/85**

(43) Date of publication of application:
**30.12.86 Bulletin 86/52**

(45) Publication of the grant of the patent:
**25.07.90 Bulletin 90/30**

(84) Designated Contracting States:
**DE FR GB NL**

(56) References cited:
**DE-A-2 507 132**
**FR-A-2 158 729**
**FR-A-2 370 105**
**US-A-4 140 556**

**CHEMICAL ABSTRACTS, vol. 102, no. 12, 25th March 1985, page 228, abstract no. 99516, Columbus, Ohio, US; & JP - A - 84 193 239 (MITSUBISHI ALUMINUM CO. LTD.) 01-11-1984 Mondolfo. Aluminium Alloys: Structure and and Properties. Butterworths (1976) p.852, p.862.**

(73) Proprietor: **Furukawa Aluminum Co., Ltd.**
**6-1, 2-chome, Marunouchi Chiyoda-ku Tokyo (JP)**

(72) Inventor: **Nabae, Motohiro**
**No. 610, Kiyotakitanze-machi**
**Nikko-shi Tochigi-ken (JP)**

(74) Representative: **Kyle, Diana et al**
**ELKINGTON AND FIFE Beacon House 113 Kingsway**
**London WC2B 6PP (GB)**

Courier Press, Leamington Spa, England.

## Description

The present invention relates to an aluminium alloy suitable for use as a substrate for magnetic disks and, in particular, to an improvement in the adhesion of electroless plating being the primer treatment for the covering with magnetic substance and the surface smoothness.

Magnetic disks used for recording devices of electronic computers, generally comprise a substrate of an aluminium alloy covered with a magnetic substance. Such magnetic disks are manufactured so that, after the substrate has been processed to a predetermined thickness and the surface polished mirror-like a mixture of the powder of magnetic substance with a resin powder is coated, and then the film of magnetic substance is formed by heat treatment.

Recently, it has become necessary for the magnetic disk to have a large capacity and a high density. As a result, the magnetized area has become smaller in the magnetic disk and, at the same time, it has also become necessary to decrease the clearance between the magnetic head and the magnetic disk resulting in the need for a thin film and an improvement in the abrasion resistance of the magnetic film. For this reason, a magnetic disk is proposed, which is manufactured such that, after the substrate is processed to a predetermined thickness and the surface was finished mirror-like, a hard nonmagnetic metal, for example, Ni-P alloy is plated electrolessly as a primer and then a magnetic substance, for example, a Co-Ni-P alloy is covered by sputtering or plating.

For the substrate of such a magnetic disk, the following characteristics are required.

(1) To be nonthermal treatment type and to have sufficient strength to withstand various processings and highspeed rotation at the time of use.

(2) To be light in weight and to be capable of obtaining an excellent mirror face by polishing without the appearance of surface defects such as pits.

(3) To have excellent adhesion of electroless plating being the primer treatment and in the surface smoothness without the defects such as pits.

As the substrate for a magnetic disk satisfying these characteristics, JIS A5086 alloy (Mg 3.5—4.5 wt%, Fe $\leqq$ 0.50 wt%, Si $\leqq$ 0.40 wt%, Mn 0.20—0.7 wt%, Cr 0.05—0.25 wt%, Cu $\leqq$ 0.10 wt%, Ti $\leqq$ 0.15 wt%, Zn $\leqq$ 0.25 wt% and the balance Al) or an alloy having reduced the quantity of intermetallic compounds formed in the matrix by regulating Fe, Si, etc. which are impurities in JIS A5086 is used.

However, since, with the substrate comprising JIS A5086 alloy, the adhesion of electroless plating (being the primer treatment for the covering with magnetic substance) is inferior, there has been the problem that the film of electroless plating peels off during the covering process with magnetic substance or in use. Moreover, the surface smoothness after the electroless plating cannot be said to be adequate.

Namely, the intermetallic compounds drop out at the time of zincate treatment and form pits in the surface. These pits may disappear with subsequent frequent polishing if the thickness of the electroless plating is as thick as about 20 μm. But, the recent trend is to reduce the thickness of plating, so that even with aluminium alloy, although the pitting does not occur with polishing after plating, sometimes, pits occur because of the thinning of film. Moreover, the aluminium alloy plates are stamped out in a predetermined size and planed and polished thereafter. At that time, there may be cases when the intermetallic compounds drop out to form pit defects. Thus, there is a need to decrease the number of the intermetallic compounds in aluminium alloys and to make also the size of them small.

Chem. Abstract Vol. 102 (1985) No. 99516 g describes an aluminium alloy suitable for use as magnetic disk substrates which contains 0.3—2% Cu; 3—5% Mg; 0.5—3% Zn; 0.1—0.5% Mn; and impurities (Si, Fe, Cr, Ni and Ti) optionally with 0.02—0.5% Zr.

The present invention is concerned with an alternative aluminium alloy suitable for use as magnetic disk substrates which does not contain Cu and which has good adhesion of electroless plating.

As a result of various investigations it has become known that the adhesion of electroless Ni plating and the smoothness of the surface of plating may be realized by allowing the zincate film of pretreatment to adhere thinly, uniformly and densely, and that the adhesion of the film of Ni plating is affected not only by the adhering situation of zincate film, but also the crystal particles of material and the adhesion is improved if the crystal particles are minute. As a result of further investigations, an aluminium alloy suitable for the substrate of magnetic disks has been developed, wherein the adhesion of electroless plating being the primer treatment is improved and surface characteristics such as smoothness of the surface of plating etc. are improved.

In the present invention, the addition of Mg enhances the strength of the substrate. The reason why the content thereof was confined to 2 to 6% is due to the facts that sufficient strength cannot be obtained if less than 2% is employed and that the formation of the non-metallic accompanying compounds such as Mgo etc. increases through high temperature oxidation during melting and casting together with the formation of Al-Mg intermetallic compounds if more than 6% is employed.

Moreover, Zn is added to decrease the dissolution amount of Al and to make the film thin, uniform and dense at the time of zincate treatment resulting in the enhancement in the surface smoothness and the adhesion of electroless plating thereafter. The reason why the contents of Zn is confined to less than 7.0% is because if the content exceeds this upper limit, the rolling processibility and the corrosion resistance are lowered, in particular, since the corrosion resistance of the material is inferior also in the process of plating treatment, the zincate treatment cannot be made uniformly and the adhesion of plating and the smoothness of surface also become poor. Moreover, the reason why the limits of not less than 0.28% of Zn is set is because sufficient effect cannot be obtained at the time of zincate treatment unless the Zn content is at least at this level.

Besides, if the content of Zn lies within the range described above, the dissolution amount of Al at the time of zincate treatment can be decreased and the brilliance, that is, the smoothness of the surface after the electroless plating can be increased. Moreover, the particle diameter of the crystals of the alloy with the composition described above becomes as fine as less than 80 μm using a conventional manufacturing process. This is advantageous particularly for the improvement in surface smoothness after electroless plating being the primer treatment for the covering with magnetic substance.

Besides, depending on the manufacturing conditions of the material (for example, in the case of the annealing of material at high temperature and for long time), there are cases when the crystal particles are larger than 80 μm, but, if they become large, the surface smoothness after plating is reduced. Therefore, it is desirable to make the crystal particles small.

According to the invention, there exist inevitable impurities. Fe is one of such impurities, but it can be contained deliberately in amount not more than 0.1% together with 2 to 6% of Mg and 0.28 to 7.0% of Zn. A content of more than 0.1% of Fe is not desirable, since it forms crystallized matter of the type Al-Fe, which become too large in size and are apt to drop out at the time of planing, polishing and zincate treatment of the substrate to form pit defects.

Furthermore, when 2 to 6% of Mg, 0.28 to 7.0% of Zn and not more than 0.1% of Fe are contained and the remainder comprises of Al and inevitable impurities as above, either one or not less than two kinds of Cr within a range of not more than 0.3%, Zr within a range of not more than 0.3%, Ti within a range of not more than 0.5% and B within a range of not more than 0.05% can also be contained in a total amount of not more than 0.5%.

The additions of Cr, Zr, Ti and B are introduced to make the crystal particles minute and the surface after plating smoother. The reason why the contents of Cr and Zr are limited to not more than 0.3% is because large sized intermetallic compounds are formed if the contents exceed the upper limit. Also, the reason why the contents of Ti and B are limited to not more than 0.5% is because, even if contained exceeding this upper limit, excess Ti and B are removed and become useless during the treatment of the melt by filtering at the time of casting. Moreover, the reason why the total content of not less than two kinds of Cr, Zr, Ti and B is confined to not more than 0.5% is because, if allowed they exceed this level the large-sized intermetallic compounds are formed and they are apt to drop out at the time of planing, polishing and zincate treatment to form pit defects.

The invention is illustrated by the following Examples.

## Example 1

A commercial Al metal with a purity of higher than 99.7% was melted and the elements for the alloy were added to this to prepare the alloy melts with ingredient compositions as shown in Table 1. After degassing and settling treatment, these melts were filtered through a filter and casted cooling with water to obtain ingots having a thickness of 350 mm, a width of 1000 mm and a length of 2000 mm. After planing both faces by 10 mm each, these ingots were put into the soak for about 6 hours at a temperature of 480 ± 30°C. Thereafter according to the normal method, they were converted to the plates having a thickness of 2 mm by hot rolling and cold rolling.

From these cold rolled plates having a thickness of 2 mm, disks, having a diameter of 200 mm were stamped out and, after being annealed for 2 hours at 350°C, these were finished mirror-like by rough polishing and finish polishing.

The particle diameters of maximum crystal particle of these disks were investigated by microscopic examination, and all of them found to be 25 to 72 μm. Moreover, after these mirror plates were degreased with a commercial solvent and etched for 30 seconds with 5% aqueous solution of NaOH at 60°C, they were treated for 30 seconds with a 30% aqueous solution of $HNO_3$ at room temperature to remove the smuts. Then, following the zincate treatment, electroless Ni-P alloy plating was carried out, and the adhesion of electroless plating and the smoothness of surface were examined. These results are shown in Table 1.

Besides, the zincate treatment was carried out twice using Arp 3022N (trade name, Okuno Pharmaceutical) and, for the electroless Ni-P alloy plating, Nyclad 719 (trade name, Okuno Pharmaceutical) was used. Moreover, as to the test of adhesion, after the electroless plating, samples with an area of 50 mm square were cut out and heating for 30 minutes at a temperature of 300°C. Then, they were cooled immediately with water, and the peeling-off and the swelling of plating resulting from the difference in the thermal expansion between the Al alloy and the Ni-P alloy were examined. One causing no peeling-off and swelling was marked with ⊚, one causing them slightly with ○, and one causing them severely with × (⊚

and ○ are acceptable, × is unacceptable). As to the smoothness of surface after plating, the reflectance was measured after the electroless plating.

Table 1

| Division of alloy | No. | Composition of alloy (%) | | | | Adhesion | Smoothness of surface Reflectance (%) |
|---|---|---|---|---|---|---|---|
| | | Mg | Cu | Zn | Al | | |
| Alloy of the invention | 1-1 | 2.5 | - | 6.1 | Balance | ◎ | 91 |
| " | 1-2 | 4.1 | - | 0.30 | " | ◎ | 89 |
| " | 1-3 | 4.0 | - | 5.0 | " | ◎ | 96 |

Table 1 (2)

| Division of alloy | No. | Composition of alloy (%) | | | | Adhesion | Smoothness of surface Reflectance (%) |
|---|---|---|---|---|---|---|---|
| | | Mg | Cu | Zn | Al | | |
| Comparative alloy | 1-4 | 4.0 | - | 0.23 | Balance | ○ | 65 |
| " | 1-5 | 4.0 | - | 7.5 | " | X | 58 |
| Conventional alloy | 1-6 | Mg 4.0-Mn 0.3-Cr 0.1- Cu 0.01-Zn 0.01-Al Balance | | | | X | 70 |
| " | 1-7 | Mg 3.8-Mn 0.5-Cr 0.2- Cu 0.05-Al Balance | | | | X | 72 |

As is evident from Table 1, it can be seen that the adhesion of electroless plating is excellent by far and the reflectance, that is, the smoothness of surface is also good in the cases of alloys of the invention No. 1—1 to 1—3 compared with conventional alloys (JIS A5086 alloys) No. 1—6 and 1—7. In the cases of comparative alloy No. 1—4 with less content of Zn, the performance in the zincate treatment is lowered, so that the adhesion of plating and the smoothness of surface are inferior.

Moreover, in the cases of comparative alloys No. 1—5 with higher contents of Zn, since the corrosion resistance of materials becomes poorer in the process of the plating treatment, the zincate treatment cannot be made uniformly and the adhesion of plating an the smoothness of the surface are also inferior.

Example 2

A commercial Al metal with a purity of higher than 99.5% was melted, the alloy melts with ingredient compositions shown in Table 3 were prepared by adding the elements for the alloy to this, and mirror-like disks were obtained. After the pretreatments, electroless Ni-P alloy plating was carried out in a similar way to Example 1 except that the temperature at the time of etching with 5% NaOH was 40°C and the adhesion of electroless plating, the surface smoothness and the existence of surface defects were examined. In this case, the evaluation of adhesion was made by heating the samples for 30 minutes at 400°C and examining the peeling-off and the swelling of plating after immediate cooling with water. Moreover, as to the smoothness, the surface roughness was measured by using Universal Surface Roughness Tester Se-3H (made by Kosaka Laboratory) after Ni plating, and the results were expressed by 4-point averages of centre line average height (Ra) prescribed in JIS B0601. These results are shown in Table 2 comparing with those of conventional JIS A5086 alloy (Mg 4%, Mn 0.5%, Cr 0.2%, Fe 0.3%, Si 0.2%, Cu 0.05%, Ti 0.05%, Zn 0.1% and the remainder Al).

TABLE 2

| Div. of Alloy | No. | Composition of alloy (%) | | | | | | | | Adhesion | Surface roughness Ra (µm) or Surface characteristics |
|---|---|---|---|---|---|---|---|---|---|---|---|
| | | Mg | Zn | Fe | Cr | Zr | Ti | B | Al | | |
| Alloy of the invention | 2—1 | 2.7 | 0.66 | 0.04 | — | — | — | — | Balance | ○ | 0.028 |
| | 2—2 | 4.1 | 0.19 | 0.07 | — | — | — | — | ″ | ○ | 0.026 |
| | 2—3 | 4.3 | 5.92 | 0.03 | — | — | — | — | ″ | ○ | 0.031 |
| | 2—4 | 5.2 | 0.75 | 0.05 | — | — | — | — | ″ | ○ | 0.030 |
| | 2—5 | 3.7 | 0.65 | 0.06 | 0.04 | — | — | — | ″ | ◎ | 0.028 |
| | 2—6 | 4.0 | 1.75 | 0.03 | — | 0.11 | — | — | ″ | ◎ | 0.027 |
| | 2—7 | 3.8 | 3.27 | 0.03 | — | — | 0.012 | — | ″ | ◎ | 0.025 |
| | 2—8 | 4.3 | 6.12 | 0.08 | — | — | — | 0.001 | ″ | ◎ | 0.022 |
| | 2—9 | 4.4 | 0.70 | 0.02 | 0.15 | — | 0.006 | — | ″ | ◎ | 0.023 |
| | 2—10 | 4.1 | 2.23 | 0.04 | — | 0.08 | 0.001 | 0.014 | ″ | ◎ | 0.027 |
| | 2—11 | 3.9 | 0.38 | 0.06 | 0.06 | 0.07 | 0.001 | 0.002 | ″ | ◎ | 0.026 |
| | 2—12 | 4.0 | 3.51 | 0.03 | 0.12 | — | — | — | ″ | ◎ | 0.023 |
| | 2—13 | 3.7 | 0.72 | 0.08 | — | — | 0.033 | — | ″ | ◎ | 0.025 |
| | 2—14 | 4.2 | 1.54 | 0.04 | — | 0.10 | 0.01 | — | ″ | ◎ | 0.030 |
| | 2—15 | 3.9 | 0.83 | 0.06 | 0.02 | — | 0.003 | 0.005 | ″ | ◎ | 0.029 |

TABLE 2

| Div. of Alloy | No. | Composition of alloy (%) | | | | | | | | Adhesion | Surface roughness Ra (μm) or Surface characteristics |
|---|---|---|---|---|---|---|---|---|---|---|---|
| | | Mg | Zn | Fe | Cr | Zr | Ti | B | Al | | |
| Comparative alloy | 2—16 | 3.8 | 0.02 | 0.07 | — | | — | — | ,, | × | 0.018 |
| | 2—17 | 5.2 | 0.01 | 0.02 | 0.08 | 0.11 | 0.005 | 0.006 | ,, | × | 0.119 |
| | 2—18 | 4.0 | 7.75 | 0.03 | — | — | — | — | ,, | × | 0.112 |
| | 2—19 | 2.9 | 8.24 | 0.04 | 0.03 | 0.09 | 0.01 | — | ,, | × | 0.122 |
| | 2—20 | 4.4 | 1.27 | 0.28 | — | — | — | — | ,, | ○ | (Pit defects) |
| | 2—21 | 4.3 | 2.39 | 0.06 | 0.55 | — | | — | ,, | ◎ | (Pit defects) |
| | 2—22 | 3.9 | 0.70 | 0.05 | 0.01 | 0.42 | — | 0.02 | ,, | ◎ | (Pit defects) |
| | 2—23 | 3.9 | 0.95 | 0.03 | 0.30 | 0.25 | 0.01 | 0.03 | ,, | ◎ | (Pit defects) |
| Conv. alloy | 2—24 | (JIS A5086 alloy) | | | | | | | | × | (Pit defects) |

EP 0 206 519 B1

As is evident from Table 2, it can be seen that all of alloys of the invention No. 2—1 to 2—15 have far better adhesion and characteristics such as surface smoothness etc., compared with conventional alloy No. 2—24. Whereas, in the cases of comparative alloys, the composition thereof being out of the range of alloys of the invention, the adhesion and the characteristic such as surface smoothness etc., are seen to be poor. Namely, comparative alloys No. 2—16 and No. 2—17 with less content of Zn and comparative alloys No. 2—18 and No. 2—19 with higher content of Zn exhibit remarkedly poor adhesion and surface characteristics in all cases, and the surface characteristics of comparative alloy No. 2—20 with higher content of Fe and comparative alloys No. 2—21 to 2—23 with higher contents Cr, Zr, Ti, B etc are seen to be poor due to the intermetallic compounds.

As described, according to the invention, the adhesion of electroless nickel plating being the primer treatment for the covering with magnetic substance and the surface characteristics (smoothness and inexistence of defects such as pit etc.) are improved. Therefore, the invention exerts a remarkable effect on the improvement in the quality thereof in the mass production of magnetic disks.

## Claims

1. A magnetic disk comprising a substrate of an aluminium alloy covered with a magnetic substance, said aluminium alloy comprising
(i) 2 to 6 wt% of Mg; 0.28 to 7.0 wt% of Zn;
(ii) optionally up to 0.1% by weight of Fe;
(iii) optionally one or more of up to 0.3 wt% of Cr, up to 0.3 wt% of Zr, up to 0.05 wt% Ti and up to 0.05 wt% of B, the total amount of these additives being not more than 0.5 wt%; and
(iv) the remainder being Al and inevitable impurities.

2. A magnetic disk comprising a substrate of an aluminium alloy covered with a magnetic substance, said aluminium alloy comprising
(i) 2 to 6 wt% of Mg; 0.28 to 7.0 wt% of Zn; and
(ii) the remainder being Al and inevitable impurities.

3. A magnetic disk comprising a substrate of an aluminium alloy according to claim 1, which comprises up to 0.1% by weight of Fe.

4. A magnetic disk comprising a substrate of an aluminium alloy according to claim 1 or 2, comprising one or more of up to 0.3 wt% of Cr, up to 0.3 wt% of Zr, up to 0.05 wt% Ti and up to 0.05 wt% of B, the total amount of these additives being not more than 0.5 wt%.

## Patentansprüche

1. Magnetplatte aus einem Substrat aus einer Aluminiumlegierung, das mit einer magnetischen Substanz bedeckt ist, wobei die Aluminiumlegierung aufweist
(i) 2 bis 6 Gew.-% Mg; 0,28 bis 7,0 Gew.-% Zn;
(ii) wahlweise bis zu 0,1 Gew.-% Fe;
(iii) wahlweise 1 oder mehrere der Zusätze bis zu 0,3 Gew.-% Cr, bis zu 0,3 Gew.-% Zr, bis zu 0,05 Gew.-% Ti und bis zu 0,05 Gew.-% B, wobei die Gesamtmenge dieser Zusätze nicht mehr also 0,5 Gew.-% beträgt; und
(iv) wobei der Rest aus Al und unvermeidbaren Verunreinigungen besteht.

2. Magnetplatte aus einem Substrat aus einer Aluminiumlegierung, das mit einer magnetischen Substanz bedeckt ist, wobei die Aluminiumlegierung aufweist
(i) 2 bis 6 Gew.-% Mg; 0,28 bis 7,0 Gew.-% Zn; und
(ii) der Rest aus Al und unvermeidbaren Verunreinigungen besteht.

3. Magnetplatte aus einem Substrat aus einer Aluminiumlegierung gemäß Anspruch 1, welche bis zu 0,1 Gew.-% Fe aufweist.

4. Magnetplatte aus einem Substrat aus einer Aluminiumlegierung gemäß Anspruch 1 oder 2, bestehend aus einem oder mehreren der Zusätze bis zu 0,3 Gew.-% Cr, bis zu 0,3 Gew.-% Zr, bis zu 0,05 Gew.-% Ti und bis zu 0,05.Gew-% B, wobei die Gesamtmenge dieser Zusätze nicht mehr als 0,5 Gew.-% beträgt.

## Revendications

1. Disque magnétique, comprenant un substrat en un alliage d'aluminium, recouvert d'une substance magnétique, cet alliage d'aluminium, comprenant:
(i) de 2 à 6% en poids de magnésium; de 0,28 à 7,0% en poids de zinc;
(ii) éventuellement jusqu'à 0,1% en poids de fer;
(iii) éventuellement un ou plusieurs éléments choisis parmi le chrome à raison de jusqu'à 0,3% en poids, le zirconium à raison de jusqu'à 0,3% en poids, le titane à raison de 0,05% en poids et le bore à raison de 0,05% en poids, la quantité totale de ces additifs n'étant pas supérieure à 0,5% en poids; et
(iv) le reste consistant en aluminium et en impuretés inévitables.

2. Disque magnétique, comprenant un substrat en un alliage d'aluminium recouvert d'une substance magnétique, cet alliage d'aluminium, comprenant:

(i) de 2 à 6% en poids de magnésium; de 0,28 à 7,0% en poids de zinc; et

(ii) le reste consistant en aluminium et en impuretés inévitables.

3. Disque magnétique, comprenant un substrat en un alliage d'aluminium selon la revendication 1, comprenant jusqu'à 0,1% en poids de fer.

4. Disque magnétique, comprenant un substrat en un alliage d'aluminium selon la revendication 1 ou 2, comprenant un ou plusiers éléments choisis parmi le chrome à raison de jusqu'à 0,3% en poids, le zirconium à raison de jusqu'à 0,3% en poids, le titane à raison de jusqu'à 0,05 en poids et le bore à raison de jusqu'à 0,05% en poids, la quantité totale de ces additifs, n'étant pas supérieure à 0,5% en poids.